(19) **Europäisches Patentamt / European Patent Office / Office européen des brevets**

(11) **EP 2 631 598 A1**

(12) **EUROPEAN PATENT APPLICATION**

(43) Date of publication:
**28.08.2013 Bulletin 2013/35**

(51) Int Cl.:
*G01D 3/08* (2006.01)  *G01D 18/00* (2006.01)
*G01D 9/00* (2006.01)  *G01K 3/04* (2006.01)
*G01N 17/00* (2006.01)

(21) Application number: **12001236.4**

(22) Date of filing: **24.02.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Danfoss Drives A/S**
**6300 Graasten (DK)**

(72) Inventor: **de Place Rimmen, Peter**
**8450 Hammel (DK)**

(54) **Monitoring device usage and stress**

(57)     A mechanism is provided for determining or measuring a plurality of stress measures, with cumulative stress measures for each of the plurality of stress measures being recorded. In addition, a mechanism is provided for determining an occurrence of each of a plurality of defined stress events and a count of the number of times a defined stress event has occurred is incremented on each determined occurrence of that stress event.

Fig. 1

**Description**

FIELD OF THE INVENTION

The present invention relates to monitoring stresses applied to devices, such as electrical, electronic, mechanical and electromechanical devices, when used in the field.

BACKGROUND OF THE INVENTION

Electrical and electro-mechanical devices are subjected to a wide variety of stresses when used. Stress is related to failure, since the more stressful the circumstances in which a device is used, the more likely that device is to fail.
Stress can take many different forms. For example, a device may be subjected to vibration, humidity, rain, chemical attacks, temperature variations, user handling and dust. Each of these forms of stress can have an impact on the lifetime of a device.
Time-to-failure depends to a great degree on the conditions in which the device is used (sometimes referred to as the "mission profile"). Without reliable information regarding the operating conditions in which a device is to be used, any time-to-failure prediction is largely guesswork.
When a device fails, the operating conditions in which the device has been used are relevant to determining why the device has failed. For example, if a device that has operated for a long period of time under harsh operating conditions fails, then there may be no need to investigate the failure. However, if a device fails quickly, despite having been operating under relatively benign conditions, then the failure may be indicative of a fault (e.g. a manufacturing fault or a design fault) that may warrant further investigation.
In order to determine the conditions in which a device is being used, it is possible to provide a number of sensors to monitor conditions (such as temperature and humidity) and to make a record of the data determined by the sensors.
Many devices are expected to operate for many years. Monitoring several different data types on a regular basis for a period of years results in a very large data set being generated. Storing such a large data set locally requires substantial (and therefore expensive) data storage. Whilst this may be appropriate for relatively expensive products, it is disproportionately expensive for smaller, cheaper products; particularly for products that are sold in large quantities.
An alternative to the local storage of the data set is to store the data remotely. This is not trivial. First, such data needs to be transferred from the device to the remote storage location. This is not difficult from a technical point of view; such data could be transmitted, for example, as a short message service (SMS) text message. However, such data transfer is relatively expensive, especially given the large quantity of data being transferred. Another problem is handling the data transferred from a very large number of devices. This requires substantial data storage and also requires good organisation in order to enable the retrieval of such data.
The present invention seeks to address at least some of the problems outlined above.

SUMMARY OF THE INVENTION

The present invention provides an apparatus comprising: means (such as one or more sensors or one or more sensors coupled with a processor) for determining or measuring a plurality of stress measures, each stress measure being indicative of a level of a particular stress being applied to the apparatus; means (such as a processor) for determining an occurrence of each of a plurality of defined stress events; a memory adapted to store a current cumulative stress measure for each of the plurality of stress measures and a count of the number of times each of the defined stress events has occurred; and a processor configured to over-write the current cumulative stress measure for a particular stress measure with the sum of the cumulative stress measure for the particular stress measure and the determined or measured stress measure for the particular stress measure each time the particular stress measure is determined or measured and to increment the count of the number of times a defined stress event has occurred on each determined occurrence of that stress event.
By storing cumulative data regarding stress levels, an indication of overall stress can be determined with very limited data storage requirements. For example, for each measure, it might be possible to limit data storage to an overall stress measure since time = 0 and an overall time measurement (i.e. duration over which stress data has been recorded). Similarly, providing a count of the number of defined stress events can also be achieved with very limited data storage requirements. The present invention therefore provides substantial information regarding stress applied to an apparatus in use to be recorded in a simple and efficient manner. The processor may be configured to use the memory to store additional stress-related data. Such additional stress-related data could include maximum and/or minimum values (such as temperature) over a time period, extreme measurements (such as the highest five measurements of any variable), periodic measurements (such as a measurement every month) and many other measurements. The invention therefore allows significant flexibility in data storage. A user interface may be provided to enable a data storage policy to be changed by a user.

The processor may be configured to use the memory to store time-related data. For example, the time since the start of data collection may be recorded. The time at which extreme events are noted may be recorded.

The apparatus may further comprise a communications module for communicating with one or more remote entities, such as a remote data storage site. Thus, data at any particular time (such as a cumulative stress measure) could be sent from the communications module to the remote data storage site. Alternatively, or in addition, the communications module could be used for sending configuration information to the processor. For example, a user may decide that it is necessary to take periodic readings more often due to a suspected fault.

The memory may be a non-volatile memory. Thus, data relating to stress conditions stored in the memory can be retained when power is removed (as would occur, for example, if a faulty device were returned to the manufacturer).

The present invention also provides a method comprising: storing a current cumulative stress measure for each of a plurality of stress measures, wherein each stress measure is indicative of a level of a particular stress being applied to an apparatus; obtaining (e.g. determining or measuring) a current stress measure for one or more of the plurality of stress measures and for each obtained stress measure, over-writing the current cumulative stress measure with the sum of the cumulative stress measure and the obtained stress measure; and storing a count of the number of times each of a plurality of defined stress events has occurred and incrementing the count for a particular stress event on each determined occurrence of that stress event.

At least some of the plurality of stress measures may be determined or measured on a periodic basis. The period of measuring a particular stress measure may be configurable (e.g. on initialisation of a device or system, via a user interface, or perhaps via a remote communications module).

The method may include storing time-related data. For example, the time since the start of data collection may be recorded. The time at which extreme events are noted may be recorded.

The method may include sending data to a remote entity.

The method may include receiving configuration information from a remote entity.

A remote entity used with the present invention could, for example, be a remote data storage site. Thus, data at any particular time (such as a cumulative stress measure) could be sent from the communications module to the remote data storage site. Alternatively, or in addition, the communications module could be used for sending configuration information to the processor. For example, a user may decide that it is necessary to take periodic readings more often due to a suspected fault.

BRIEF DESCRIPTION OF THE DRAWINGS

The invention will now be described in further detail with reference to the following schematic drawings, in which:

Figure 1 is a block diagram of a system in accordance with an aspect of the present invention;
Figure 2 is a graph showing a cumulative stress measurement plotted against time;
Figure 3 is a block diagram showing an algorithm in accordance with an aspect of the present invention;
Figure 4 is a graph showing stress data plotted against time showing the occurrence of a stress event;
Figure 5 is a block diagram showing an algorithm in accordance with an aspect of the present invention; and
Figure 6 is a block diagram showing an algorithm in accordance with an aspect of the present invention.

DETAILED DESCRIPTION OF THE INVENTION

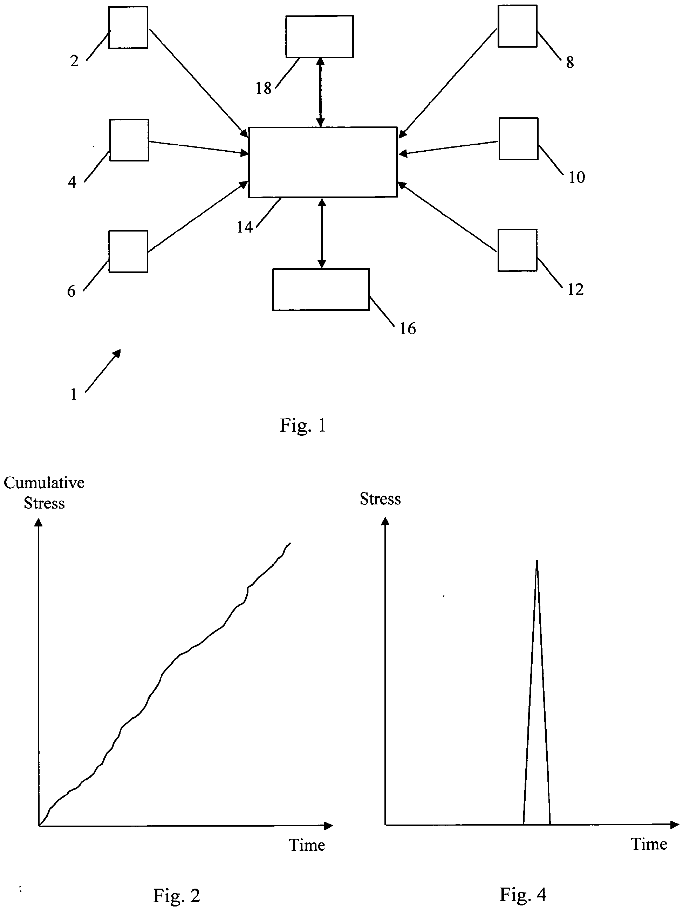

Figure 1 is a block diagram of a system, indicated generally by the reference numeral 1, in accordance with an aspect of the present invention.

The system 1 comprises a first sensor 2, a second sensor 4, a third sensor 6, a fourth sensor 8, a fifth sensor 10, a sixth sensor 12, a processor 14 and a memory 16. Each of the sensors is coupled to the processor 14. The processor 14 is in two-way communication with the memory 16. The system 1 may additionally include a communications module 18. The communications module 18 may send data (such as stress related data) to a remote data store and/or may receive configuration or other information from a remote location.

The processor 14 uses data obtained from the sensors 2 to 12 to determine a number of stress measures. Data relating to the stress measures are stored in the memory 16. The memory 16 may be non-volatile to enable data stored therein to be retrieved if the system 1 fails or a power supply for the system 1 is removed.

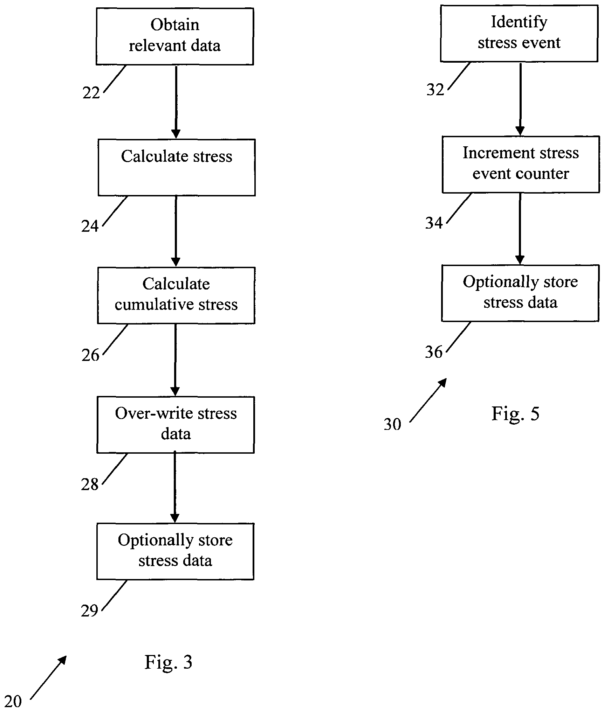

The stress measures determined by the processor 14 may take a number of different forms. In particular, a particular stress measure may take the form of a cumulative stress measure (as described below with reference to Figures 2 and 3). Another particular stress measure may take the form of a stress event (as described below with reference to Figures 4 and 5).

Temperature is known to cause a static thermal stress that has an impact on the reliability of electrolytic capacitors. This stress is cumulative, so that the impact of the stress increases over time. If the temperature is known, then the stress can be determined. Thus, if one of the sensors 2 to 12 is a temperature sensor, then the accumulated static thermal stress can be determined.

At any particular time, the so-called acceleration factor (AF) that relates to the increase in degradation due to temperature is given by the following formula (referred to in the art as the Arrhenius equation):

$$AF = \exp\left(\frac{E_A}{k}\left(\frac{1}{T_{field}} - \frac{1}{T_{test}}\right)\right)$$

Where:

AF is the acceleration factor

$E_A$ is an activation energy (typically from 0.1 to 1.5 eV) k is Boltzmann's constant (8.617 x 105 eV/Kelvin) $T_{field}$ is the measured temperature in the field

$T_{test}$ is the temperature in a test against which the acceleration factor is determined

Figure 2 plots a cumulative stress (on the vertical axis) over time. The cumulative stress may be the static thermal stress described above. It should be noted that the shape of the curve is not particularly relevant to the reliability of an electrolytic capacitor: what matters is the overall cumulative stress measure. Accordingly, the present invention involves recording the total cumulative stress since a defined start time and does not require recording previous measurements. This process is achieved by overwriting old data, as described below with reference to Figure 3. Thus, a cumulative stress measure defines the overall stress applied over a given time period, but does not record how the stress changed over that time period.

Figure 3 shows an algorithm, indicated generally by the reference numeral 20, in accordance with an aspect of the present invention. The algorithm 20 starts at step 22, where relevant data is obtained to enable a determination to be made of the level of a particular stress that is occurring at a particular point in time (or over a given short time period). The step 22 typically involves obtaining data from one or more of the sensors 2 to 12 described above (such as a temperature sensor).

The data obtained at step 22 is used (at step 24 of the algorithm 20) to determine the relevant stress measure. By way of example, the data obtained at step 22 may be temperature. The step 24 may then use the measured temperature to calculate the acceleration factor associated with static thermal stress using the formula described above.

Next, at step 26, the stress measure determined at step 24 is added to a previous cumulative stress measure to obtain a new cumulative stress measure.

At step 28 of the algorithm 20, the previous cumulative stress measure is overwritten with the new cumulative stress data calculated at step 26. The stress data recorded may comprise the cumulative stress quantity together with a value indicating the time period over which the cumulative stress data has been recorded.

Finally, in an optional step 29, the stress data calculated in step 24 may be recorded in the memory 16. This may occur, for example, in the event that the stress data is unusual in some way and is therefore worth recording (in addition to recording the cumulative stress data). By way of example, if the stress data in unusually high, the stress data itself may be recorded. Similarly, if the rate of change of a stress measures is higher than usual, data may be recorded for a period of time. Alternatively, or in addition, the step 29 may be used to store stress data on a periodic basis. For example, although generally only the current cumulative stress data may be recorded, a record of the cumulative stress at particular times (such as once per month) may be recorded. In this way, the change of cumulative stress over time can be recorded, whilst keeping data storage requirements low.

Thus, the algorithm 20 enables a single measure of static thermal stress to be recorded. This measure can be used, for example, as an indication of the stress applied to electrolytic capacitors in the relevant device. Thus, in the event of a failure of an electrolytic capacitor, the cumulative static thermal stress can be checked to determine whether the failure of the electrolytic capacitor is reasonable given the stress that was applied during use.

Static thermal stress is one of many cumulative stress measures that can be measured and recorded as described above with reference to Figures 2 and 3. Other examples include relative humidity, vibration and temperature fluctuations.

By way of example, the effect of relative humidity (RH) can be expressed as an acceleration factor (AF) using the following formula:

$$AF = \left( \frac{RH_{test}}{RH_{field}} \right)^{n} \exp\left( \frac{E_A}{k} \left( \frac{1}{T_{field}} - \frac{1}{T_{test}} \right) \right) t_{acceleration}$$

Where:

AF is the acceleration factor
$RH_{test}$ is the relative humidity in a test against which the acceleration factor is determined
$RH_{field}$ is the measured relative humidity in the field
n is an empirical factor (typically -3)
$E_A$ is an activation energy (typically from 0.1 to 1.5 eV)
k is Boltzmann's constant (8.617 x 105 eV/Kelvin)
$T_{field}$ is the measured temperature in the field
$T_{test}$ is the temperature in a test against which the acceleration factor is determined
$t_{acceleration}$ takes the duration of the moisture period into account.

Thus, the impact of relative humidity can be calculated in a similar manner to the impact of static temperature. A cumulative measure of the impact of relative humidity can be determined and recorded, over-writing earlier measurements.

The effect of vibration can be expressed as an acceleration factor (AF) using the following formula:

$$AF = \left( \frac{G_{test}}{G_{use}} \right)^{M}$$

Where:

AF is the acceleration factor
$G_{test}$ is the vibration level (in g rms) in a test against which the acceleration factor is determined
$G_{use}$ is the measured vibration level
M is an empirical factor (typically 4)

As described above, the impact of static temperature on the degradation of an electrolytic capacitor can be modelled using the Arrhenius equation. Temperature also affects the reliability of solder connections; however, the reliability of solder connections is affected by changes in temperature, rather than the absolute temperature level. A cumulative stress measure for cyclic temperature change can be modelled using the so-called Coffin/Manson model as follows:

$$AF = \left( \frac{\Delta T_{test}}{\Delta T_{use}} \right)^{m}$$

Where:

AF is the acceleration factor
$\Delta T_{test}$ is the temperature change in a test against which the acceleration factor is determined
$\Delta T_{use}$ is the measured temperature change
m is an empirical factor (typically 1.9)

Thus, the algorithm 20 can be used to record a number of cumulative stress variables. Some exemplary cumulative stress measures are described above, some or all of which could be used in any exemplary implementation of the present invention. Of course, other stress measures could be used instead of, or in addition to, the stress measures described above. Moreover, the formulae used to determine the relevant stress measure are provided by way of example only; alternative formulae for determining similar stress measures could be used.

In addition to cumulative stress measures, reliability of a device can be affected by so-called stress events.

Figure 4 plots stress (on the vertical axis) over time. As shown in Figure 4, the stress is generally zero, but a sharp spike in stress is shown. This sharp spike is an example of a stress event.

One exemplary stress event is physical shock, which may, for example, be caused by dropping a device. Such a physical shock can be measured using one or more accelerometers in a manner well known in the art.

Figure 5 shows an algorithm, indicated generally by the reference numeral 30, in which stress events are monitored. The algorithm 30 starts at step 32 where a stress event is identified. As mentioned above, the stress event may be physical shock caused by a device being dropped. Many other stress events will, of course, be apparent to the skilled person.

In the case of determining whether a device has been dropped, an accelerometer may be used. A threshold level of acceleration may be defined to indicate that the device is accelerating to a degree sufficient to indicate that it has been dropped. Filtering may be required to prevent both false reporting of such a stress event and to prevent double counting of a stress event in the event that the measured variable (such as acceleration) moves above and below the threshold in a single event.

Once a stress event is identified, the algorithm moves to step 34 where a stress event counter is incremented. In some forms of the invention, a number of stress events are defined and a separate counter is provided for each of those stress events.

The algorithm 30 may optionally include a step 36 in which the stress measurements may be recorded in the memory 16 in response to stress events being detected. This would enable, for example, the impact of a particular stress event on a particular cumulative stress measure to be recorded.

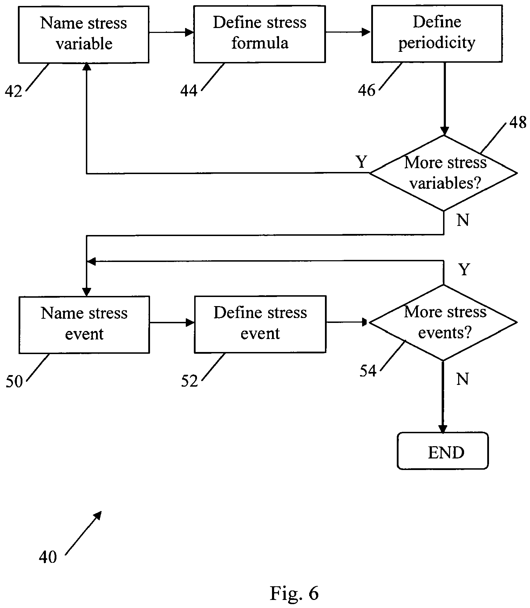

Figure 6 is a block diagram showing an algorithm, indicated generally by the reference numeral 40. The algorithm 40 provides a configuration procedure of a system in accordance with an aspect of the present invention.

The algorithm 40 starts at step 42, where a cumulative stress variable is named. The stress variable may, for example, relate to static temperature, dynamic temperature, relative humidity, vibration etc. Next, at step 44, a formula for defining the stress variable is defined. The formula may take the form of one of the acceleration factors described above. The algorithm 40 then moves to step 46 where the measurement period for the stress variable is set. The measurement period may, for example, be 1 second, so that a measurement of the relevant stress variable is taken once per second. Clearly, the period could be different for different variables. The step 46 could also be used for setting other data storage parameters, for example by indicating that in addition to recording a current cumulative stress measure for a particular variable, the cumulative stress measure should also be recorded on a monthly basis in order to show how that measure changes over time whilst still keeping data storage requirements low.

The algorithm 40 then moves to step 48 where it is determined whether any further stress variables are to be defined. If so, the algorithm returns to step 42 and steps 42, 44, 46 and 48 are repeated. If all stress variables have been defined, the algorithm 40 moves to step 50 where a stress event is defined. A definition of the stress event is defined at step 52 and, at step 54, it is determined whether there are any further stress events to define. If so, the algorithm returns to step 50: otherwise the algorithm 40 terminates. The step 52 may include providing additional instructions regarding actions that should be taken in the event that a particular stress measure is detected (such as storing one or more cumulative stress measures).

As described above, systems such as electrical, electronic, mechanical and electromechanical systems can be subjected to a wide variety of stresses in use. Collectively such stresses are referred to as a "mission profile" determining the use of the system. The present invention enables information relating to the mission profile to be recorded in a simple, efficient manner.

The mission profile information can be used to extrapolate fault conditions. This is important since faults are closely related to stress. Mission profile information can be used, for example, to determine whether a fault in a product is likely to be due to stress applied by the customer (which might invalidate a warranty) or a fault in the product itself (so that the warranty would be valid).

Further, a particular customer could be identified as a "high stress user". Products could be custom designed for such a customer.

The embodiments of the invention described above are provided by way of example only. The skilled person will be aware of many modifications, changes and substitutions that could be made without departing from the scope of the present invention. The claims of the present invention are intended to cover all such modifications, changes and substitutions as fall within the spirit and scope of the invention.

**Claims**

1. An apparatus comprising:

   means for determining or measuring a plurality of stress measures, each stress measure being indicative of a level of a particular stress being applied to the apparatus;
   means for determining an occurrence of each of a plurality of defined stress events;
   a memory adapted to store a current cumulative stress measure for each of the plurality of stress measures and a count of the number of times each of the defined stress events has occurred; and
   a processor configured to over-write the current cumulative stress measure for a particular stress measure with the sum of the cumulative stress measure for the particular stress measure and the determined or measured stress measure for the particular stress measure each time the particular stress measure is determined or measured and to increment the count of the number of times a defined stress event has occurred on each determined occurrence of that stress event.

2. An apparatus as claimed in claim 1, wherein the processor is configured to use the memory to store additional stress-related data.

3. An apparatus as claimed in claim 1 or claim 2, wherein the processor is configured to use the memory to store time-related data.

4. An apparatus as claimed in any preceding claim, further comprising a communications module for communicating with one or more remote entities.

5. An apparatus as claimed in any preceding claim, wherein the memory is a non-volatile memory.

6. A method comprising:

   storing a current cumulative stress measure for each of a plurality of stress measures, wherein each stress measure is indicative of a level of a particular stress being applied to an apparatus;
   obtaining a current stress measure for one or more of the plurality of stress measures and for each obtained stress measure, over-writing the current cumulative stress measure with the sum of the cumulative stress measure and the obtained stress measure; and
   storing a count of the number of times each of a plurality of defined stress events has occurred and incrementing the count for a particular stress event on each determined occurrence of that stress event.

7. A method as claimed in claim 6, wherein at least some of the plurality of stress measures are determined or measured on a periodic basis.

8. A method as claimed in claim 7, wherein the period of measuring a particular stress measure is configurable.

9. A method as claimed in any one of claims 6 to 8, further comprising storing time-related data.

10. A method as claimed in any one of claims 6 to 9, further comprising sending data to a remote entity.

11. A method as claimed in any one of claims 6 to 10, further comprising receiving configuration information from a remote entity.

Fig. 1

Fig. 2

Fig. 4

```
        ┌──────────────┐                    ┌──────────────┐
        │   Obtain     │                    │   Identify   │
        │ relevant data│                    │ stress event │
        └──────────────┘                    └──────────────┘
      22                                  32
                │                                   │
                ▼                                   ▼
        ┌──────────────┐                    ┌──────────────┐
        │   Calculate  │                    │ Increment    │
        │    stress    │                    │ stress       │
        │              │                    │ event counter│
        └──────────────┘                    └──────────────┘
      24                                  34
                │                                   │
                ▼                                   ▼
        ┌──────────────┐                    ┌──────────────┐
        │  Calculate   │                    │ Optionally   │
        │ cumulative   │                    │ store        │
        │   stress     │                    │ stress data  │
        └──────────────┘                    └──────────────┘
      26                                  36
                │                                         Fig. 5
                ▼                               30
        ┌──────────────┐
        │ Over-write   │
        │ stress       │
        │   data       │
        └──────────────┘
      28
                │
                ▼
        ┌──────────────┐
        │ Optionally   │
        │ store        │
        │ stress data  │
        └──────────────┘
      29
                                Fig. 3

        20
```

Fig. 6

Europäisches
Patentamt

European
Patent Office

Office européen
des brevets

## EUROPEAN SEARCH REPORT

Application Number

EP 12 00 1236

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 96/11388 A1 (HONEYWELL SA [FR]; KROLL MARC [FR]) 18 April 1996 (1996-04-18) * page 3 - page 7; figures 1,2 * ----- | 1-11 | INV. G01D3/08 G01D18/00 G01D9/00 |
| A | EP 1 319 928 A1 (3M INNOVATIVE PROPERTIES CO [US]) 18 June 2003 (2003-06-18) * the whole document * ----- | 1-11 | G01K3/04 G01N17/00 |
| A | US 5 600 576 A (BROADWATER STUART P [US] ET AL) 4 February 1997 (1997-02-04) * column 4, line 26 - column 8, line 8; figures 1-6 * ----- | 1-11 | |
| A | US 5 754 449 A (HOSHAL GREGORY D [US] ET AL) 19 May 1998 (1998-05-19) * column 3, line 6 - column 7, line 67; figures 1-7 * ----- | 1-11 | |

|  |  |  | TECHNICAL FIELDS SEARCHED (IPC) |
|---|---|---|---|
|  |  |  | G01D G01K G01N |

The present search report has been drawn up for all claims

| Place of search | Date of completion of the search | Examiner |
|---|---|---|
| The Hague | 21 June 2012 | Chapple, Ian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 12 00 1236

This annex lists the patent family members relating to the patent documents cited in the above-mentioned European search report.
The members are as contained in the European Patent Office EDP file on
The European Patent Office is in no way liable for these particulars which are merely given for the purpose of information.

21-06-2012

| Patent document<br>cited in search report | | Publication<br>date | Patent family<br>member(s) | | Publication<br>date |
|---|---|---|---|---|---|
| WO 9611388 | A1 | 18-04-1996 | AU | 3617895 A | 02-05-1996 |
| | | | DE | 69514932 D1 | 09-03-2000 |
| | | | DE | 69514932 T2 | 03-08-2000 |
| | | | DK | 784785 T3 | 01-05-2000 |
| | | | EP | 0784785 A1 | 23-07-1997 |
| | | | ES | 2145299 T3 | 01-07-2000 |
| | | | US | 5927854 A | 27-07-1999 |
| | | | WO | 9611388 A1 | 18-04-1996 |
| EP 1319928 | A1 | 18-06-2003 | AU | 2002335875 A1 | 30-06-2003 |
| | | | BR | 0214898 A | 07-12-2004 |
| | | | CN | 1602410 A | 30-03-2005 |
| | | | EP | 1319928 A1 | 18-06-2003 |
| | | | EP | 1456607 A1 | 15-09-2004 |
| | | | JP | 2005513431 A | 12-05-2005 |
| | | | MX | PA04005627 A | 06-12-2004 |
| | | | WO | 03052354 A1 | 26-06-2003 |
| US 5600576 | A | 04-02-1997 | NONE | | |
| US 5754449 | A | 19-05-1998 | NONE | | |

EPO FORM P0459

For more details about this annex : see Official Journal of the European Patent Office, No. 12/82